# EUROPEAN PATENT APPLICATION

(11) **EP 2 778 471 A1**
(43) Date of publication of application: **17.09.2014**
(21) Application number: 12843877.7
(22) Date of filing: 25.10.2012
(51) Int. Cl.: F16H 7/12, F16H 7/08

(54) **TENSIONER**

(30) Priority: 29.10.2011 CN 201110352533; 29.10.2011 CN 201120441296 U
(71) Applicant: The Gates Corporation, Denver, CO 80202 (US)
(72) Inventor: HAO, Minchun, Shanghai 200131 (CN); FU, Hongliang, Shanghai 200131 (CN); ZHANG, Yuhong, Shanghai 200131 (CN)
(74) Representative: Carpmaels & Ransford LLP
(86) International application number: PCT/CN2012/083467
(87) International publication number: WO 2013/060276

(57) **Abstract**

The present invention discloses a tensioner which comprises: a base; a swing arm mounted on the base, rotating about a first central axis with respect to the base; an elastic element positioned between the base and the swing arm, which is used for biasing the swing arm to rotate with respect to the base; a frictional device which is located between the elastic element and the base or the swing arm, for buffering the relative movement between the swing arm and the base, wherein the elastic element exerts along the radial direction a first pressure on the frictional device such that a first frictional force is produced between the frictional device and the base or the swing arm, and the tensioner further comprises a supporting block which exerts along the radial direction a second pressure on the frictional device such that a second frictional force is produced between the frictional device and the base or the swing arm. Under the combined effect of the first fictional force and the second fictional force, the rotation of the swing arm with respect to the base is buffered, such that the tensioner of the present invention has relatively larger fictional force, that is, damping force.

## Description

### Technical Field

The present invention relates to a tensioner, and particularly to a tensioner with a frictional device.

### Background of the Prior Art

The belt transmission system on the front end face of an automotive engine generally includes an automatic tensioner which serves for making the belt transmission system kept with an appropriate belt tension.

A conventional automatic tensioner generally comprises: a base; a swing arm mounted on the base, capable of rotating about a central axis with respect to the base; a spring positioned between the base and the swing arm, which has one end connected to the base, and the other end connected with the swing arm and biasing the swing arm to rotate with respect to the base; a frictional device which is generally located between the spring and the base or the swing arm, for buffering the relative movement between the swing arm and the base. A conventional frictional device generally has a frictional surface which will cooperate with the corresponding frictional surface of the base or the swing arm after the spring exerts force on the frictional device, and certain frictional force, i.e. damping force, is generated between the frictional surfaces of both, such that the movement of the swing arm with respect to the base is buffered. When the rotating speed of an engine varies quickly, such conventional spring would fail to prevent the belt tension from increasing, due to the frictional force too low, and the arm of the tensioner would move toward the direction away from the belt, such that it is incapable of keeping sufficient tension in the belt, and slippage, noise and so on will occur in the belt transmission system

### Summary of the Invention

The technical problem to be solved by the present invention is to provide a tensioner with larger frictional force.

To solve the above technical problem, the present invention provides a tensioner which comprises: a base; a swing arm mounted on the base, rotating about a first central axis with respect to the base; an elastic element positioned between the base and the swing arm, which is used for biasing the swing arm to rotate with respect to the base; a frictional device which is located between the elastic element and the base or the swing arm, for buffering the relative movement between the swing arm and the base, wherein the elastic element exerts along the radial direction a first pressure on the frictional device such that a first frictional force is produced between the frictional device and the base or the swing arm. The tensioner further comprises a supporting block which exerts along the radial direction a second pressure on the frictional device such that a second frictional force is produced between the frictional device and the base or the swing arm.

In the technical solution adopted by the present invention, the elastic element exerts a first pressure on the frictional device such that a first frictional force is produced between the frictional device and the base or the swing arm, and concurrently the supporting block exerts a second pressure on the frictional device such that a second frictional force is produced between the frictional device and the base or the swing arm. The first frictional force and the second frictional force are collectively functioning to prevent the swing arm from rotating with respect to the base, such that the tensioner of the present invention obtains larger frictional force. i.e. damping force. Such tensioner, even used in a system with the engine having large variation in rotating speed, can stably maintain the belt tension.

Preferably, the supporting block is in a partial-ring shape, with the center angle of the partial-ring shape may be any between 90° to 180°, and the supporting block is located radially inside of the frictional device.

Preferably, the supporting block has a center angle of 120°.

Preferably, the supporting block has a center angle of 180°, that is, being in semi-circle shape.

Preferably, the supporting block comprises a first end face and a second end face which are respectively located at two circumferential ends of the partial-ring shape supporting block, and the swing arm is provided with a first abutting surface, the elastic element comprises a fixed end and a free end, the fixed end is connected with the base, the first end face of the supporting block is in contact with the first abutting surface of the swing arm, and the second end face of the supporting block is in contact with the free end of the elastic element.

Preferably, the supporting block comprises a first end and a second end face which are respectively located at two circumferential ends of the partial-ring shape supporting block, and the elastic element comprises a fixed end and a free end, the fixed end is connected with the base, the first end of the supporting block is pivotably hinged to the swing arm, and the second end face of the supporting block is in contact with the free end of the elastic element.

Preferably, said hinging is achieved by a hinging member which consists of two coaxial cylindrical parts with different diameters, the cylindrical part with smaller diameter is provided with screw threads and the cylindrical part with larger diameter has smooth outer surface, the swing arm is provided with a threaded hole which is threadly engaged with the cylindrical part with smaller diameter, the supporting block has a hole in the first end, the hole includes two coaxial unthreaded holes with different diameters, the hole is in the step form in the cross section along the longitudinal axis, wherein the hole with large diameter pivotly cooperates with the large diameter part of the hinging member and the hole with small diameter pivotly cooperates with the small diameter part of the hinging member. When the hinging member passes through the hole in the supporting block to be screwed in the threaded hole in the swing arm, the supporting block can pivots around the hinging member with respect to the swing arm.

Preferably, the swing arm comprises a swing arm body, a first shaft sleeve and a second shaft sleeve, wherein the supporting block surrounds the first shaft sleeve, the swing arm body is provided with a first abutting surface and a central boss on one side facing to the first shaft sleeve, and the supporting block, along the longitudinal direction, is located between the central boss and the elastic element.

Preferably, the central boss is provided thereon with a boss cooperation portion which is used for cooperating with the supporting block, and the thickness of the boss cooperation portion gradually increases circumferentially, starting from the position of the first abutting surface, presenting a trend of rising spirally.

Preferably, the thickness of the supporting block circumferentially increases gradually.

Preferably, the circumferential extension of the boss cooperation portion is slightly less than the circumferential extension of the supporting block.

Preferably, the supporting block comprises an upper surface and a lower surface and the lower surface is provided with at least one protrusion which is in contact with the elastic element.

Preferably, the number of the protrusions is three, the protrusions are arranged at an interval in the circumferential direction, and the three supporting protrusions have thicknesses increased gradually.

Preferably, the frictional device comprises a frictional sleeve and a supporting sleeve, the frictional sleeve is located radially outside the supporting sleeve, the outer surface of the frictional sleeve is in contact with the inner surface of the base, and the inner surface of the supporting sleeve is in contact with the outside portion of the elastic member.

Preferably, the inner surface of the frictional sleeve is provided with several radial protrusions, the supporting sleeve is correspondingly provided with several openings, the swing arm is provided with several receiving recesses, wherein the several protrusions pass through the several openings to cooperate with the several receiving recesses on the swing arm, such that the frictional sleeve, together with the supporting sleeve, rotates along with the swing arm.

Preferably, the supporting block and the frictional device are mounted on the base, and the swing arm rotates with respect to the base, the supporting block and the frictional device.

### Brief Description of the Drawings

The present invention is described further by referring to figures and embodiments.
Fig. 1 is a schematic view of a tensioner disclosed by a first embodiment of the present invention.
Fig. 2 is a longitudinal sectional view of the tensioner illustrated in Fig. 1.
Fig. 3 is an exploded view of the tensioner illustrated in Fig. 1.
Fig. 4 is a prospective view of the swing arm of the tensioner illustrated in Fig. 1.
Fig. 5 is a schematic view of the tensioner illustrated in Fig. 1, which has a swing arm with a supporting block mounted thereon.
Fig. 6 is a prospective view of a supporting block of the tensioner illustrated in Fig. 1.
Fig. 7 is a cross sectional view of the tensioner illustrated in Fig. 1.
Fig. 8 is a schematic view of the tensioner illustrated in Fig. 1, which has the swing arm with the supporting block and an elastic element mounted thereon.
Fig. 9 is a schematic view of force analysis of the supporting block of the tensioner illustrated in Fig. 1.
Fig. 10 is a schematic view of force analysis where the supporting block has a center angle of 120°.
Fig. 11 is a longitudinal sectional view of the tensioner disclosed in the second embodiment of the present invention.
Fig. 12 is an exploded view of some components of the tensioner of the third embodiment of the present invention.

In the figures:

| | | | | | |
|---|---|---|---|---|---|
| 20. | tensioner | 46. | threaded hole | 68. | upper surface |
| 22. | pulley | 47. | bolt | 70. | lower surface |
| 24,24a | base | 48,48a. | elastic element | 72. | protrusion |
| 26,26a. | swing arm | 50. | fixed end | 74. | first-abutting surface |
| 28. | base bottom wall | 52. | free end | | |
| 30. | inner sleeve | 54,54a. | frictional | 76. | central boss |
| 32. | outer sleeve | | device | 77. | boss cooperation portion |
| 34. | first receiving cavity | 56. | frictional sleeve | | |
| | | 57. | radial protrusion | 78. | receiving recess |
| 36. | second receiving | 58. | supporting sleeve | 80. | hinging member |
| | cavity | 59. | opening | 81. | small diameter part |
| 38. | swing arm body | 60,60a,60b. | supporting block | 82. | large diameter part |
| 40. | first shaft sleeve | | | 83. | threaded hole |
| 42. | second shaft sleeve | 62, 62b. | first end face | 84. | hole |
| 44. | central liner bushing | 64. | second end face | X. | first central axis |
| | | 66. | outside surface | Y. | second central axis |

### Detailed Description of the Preferred Embodiments

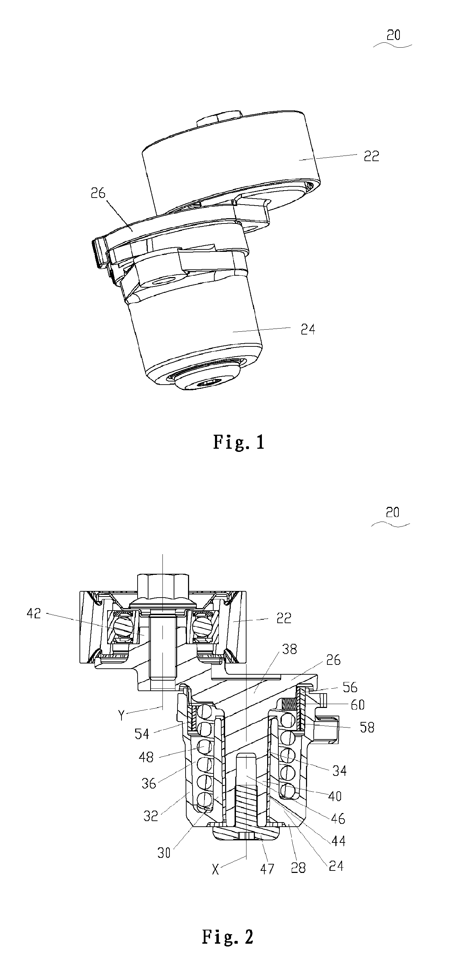

The embodiments of the present invention will be described below in detail by referring to figures. Figs. 1-9 illustrate the first embodiment of the present invention. Firstly, referring to Figs. 1-3, the present invention discloses a tensioner 20 used for a belt transmission system of an engine accessory. A pulley 22 is mounted on the tensioner 20, and during use of the tensioner 20, the pulley 22 cooperates with a transmission belt (not shown) to adjust the tension of the transmission belt.

The tensioner 20 is a mechanical automatic tensioner. The tensioner 20 comprises a base 24 through which the tensioner 20 can be mounted on the engine housing (not shown). The tensioner 20 also comprises a swing arm 26 on which the pulley 22 is mounted, and the swing arm 26 is mounted on the base 24 and rotates with respect to the base 24.

The base 24 comprises a base bottom wall 28, an inner sleeve 30 and an outer sleeve 32. The base bottom wall 28 is approximately in disk shape. The inner sleeve 30 extends axially from the center of the base bottom wall 28 and toward the direction approaching the swing arm 26. The inner sleeve 30 has circular ring section. The inner sleeve 30 is integrated with the bottom wall 28. The inner sleeve 30 is hollow inside with the inner hollow portion forming a first receiving cavity 34. The first receiving cavity 34 runs axially through the whole inner sleeve 30 and the base bottom wall 28 and is communicated with the outside. The outer sleeve 32 extends axially from the periphery of the base bottom wall 28, toward the direction approaching the swing arm 26. In the present embodiment, the length of the axial extension of the outer sleeve 32 is larger than that of the axial extension of the inner sleeve 30. The outer sleeve 32 and the inner sleeve 30 are arranged along the radial direction at a certain interval, that is, a second receiving cavity 36 is formed between the outside surface of the inner sleeve 30 and the inside surface of the outer sleeve 32.

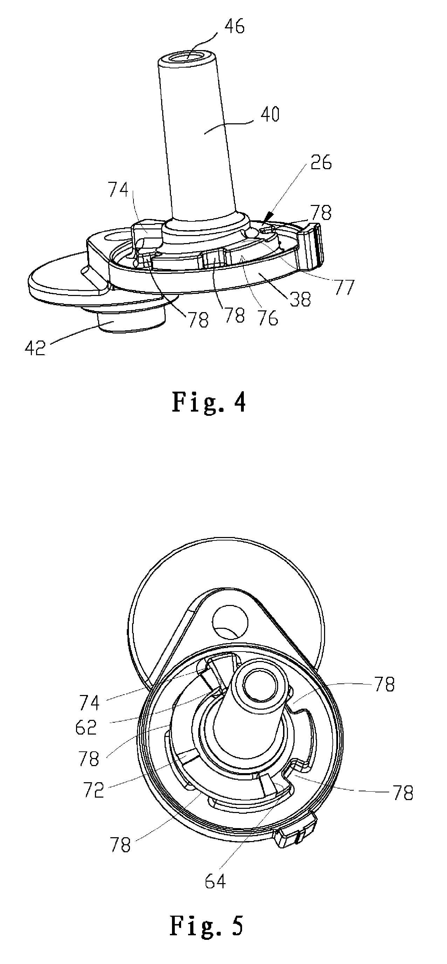

Referring to Fig. 4 at the same time, the swing arm 26 comprises a swing arm body 38 which is substantially in disk shape. The swing arm 26 also comprises a first shaft sleeve 40 and a second shaft sleeve 42. The first shaft sleeve 40 extends axially from the swing arm body 38, toward the direction approaching the base bottom wall 28. The second shaft sleeve 42 extends axially from the swing arm body 38, toward the direction away from the base bottom wall 28. The first shaft sleeve 40 has a first central axis X and the second shaft sleeve 42 has a second central axis Y, with the first central axis X and the second shaft sleeve 42 parallel with each other and arranged along the radial direction at a certain interval. The first shaft sleeve 40 and the second shaft sleeve 42 are each in substantial column shape and integrated to the swing arm body 38. The first shaft sleeve 40 can be pivotly engaged to the first receiving cavity 34, for example, the first shaft sleeve 40 is docked with the first receiving cavity 34, and alternatively, as shown in Fig. 2, the first shaft sleeve 40 is at least partially received in the first receiving cavity 34, and the a central liner bushing 44 is provided between the outside surface of the first shaft sleeve 40 and the inside surface of the inner sleeve 30, wherein the central liner bushing 44 separates the first shaft sleeve 40 from the inner sleeve 30, to prevent the direct metal-surface contact between the both and at the same time adjust the gap between the both as well. The first shaft sleeve 40 is provided with a threaded hole 46 at one end thereof away from the swing arm body 38. A bolt 47 is inserted in the threaded hole 46 and used for connecting the swing arm 26 and the base 24, such that the swing arm 26 is fixed axially with respect to the base 24, so as not to be moved axially. The second shaft sleeve 42 is used to mount in a known approach the above pulley 22 which can rotate with respect to the second shaft sleeve 42.

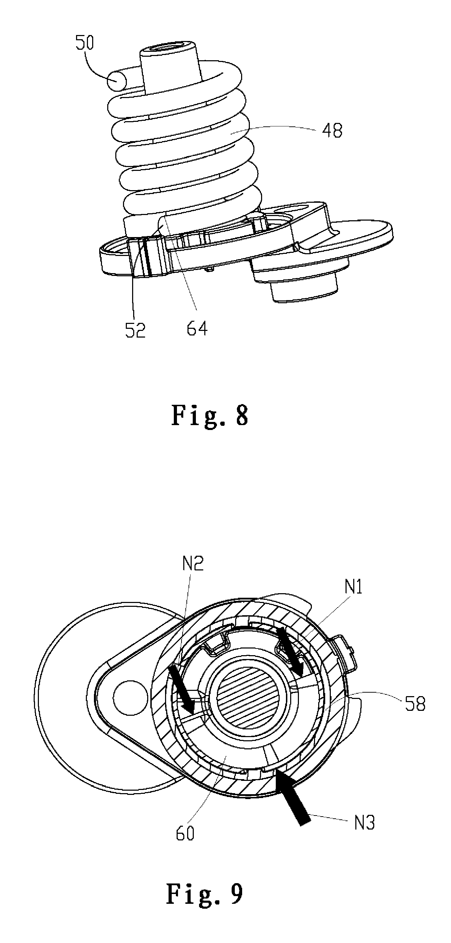

An elastic element 48 is provided between the swing arm 26 and the base 24, for biasing the swing arm 26 such that the swing arm 26 rotates with respect to the base 24. In the present embodiment, the swing arm 26 rotates around the first central axis X with respect to the base 24. And in the present embodiment, the elastic element 48 is a spiral spring. The elastic element 48 is received in the second receiving cavity 36 and surrounds the outside the inner sleeve 30. The length of the axial extension of elastic element 48 is larger than that of the axial extension of the inner sleeve 30, such that the elastic element 48 has one portion surrounding outside the inner sleeve 30, and the other portion surrounding outside the first shaft sleeve 40. Referring to Fig. 8 at the same time, the elastic element 48 comprises a fixed end 50 and a free end 52, wherein the fixed end 50 abuts the base bottom which is provided with a stopping surface (not shown). The end face of the fixed end cooperates with the above stopping surface, so as to substantially limit the circumferential movement of the fixed end.

Referring to Figs. 2, 3 and 5 at the same time, the tensioner 20 further comprises a fictional device 54, normally called a damping device. The frictional device 54 is used for buffering the relative movement between the swing arm 26 and the base 24. In the present embodiment, along the radial direction, the frictional device 54 is located between the outer sleeve 32 of the base 24 and the elastic element 48. More particularly, the frictional device 54 is located between one end of the outer sleeve 32 of the base 24 away from the base bottom wall 28 and one end of the elastic element 48 away from the base bottom wall 28. Moreover, the frictional device 54 is located radially outside of the elastic element 48. The outside surface of the frictional device 54 is in contact with the inside surface of the outer sleeve 32 of the base 24, such that when the swing arm 26 rotates with respect to the base 24, frictional force is generated between the swing arm and the base, for preventing the swing arm 26 from moving with respect to the base 24. The length of the axial extension of the outer sleeve 32 is larger than that of the axial extension of the elastic element 48, such that the outer sleeve 32 surrounds the whole elastic element 48 throughout the axial direction of the elastic element 48. And along the axial direction, one portion of the frictional device 54 surrounds outside the elastic element 48 and the inside surface of the frictional device 54 is in contact with the outside of the elastic element 48. The other portion of the frictional device 54 surrounds outside the first shaft sleeve 40.

In the present embodiment, the frictional device 54 comprises a fictional sleeve 56 and a supporting sleeve 58, with the frictional sleeve 56 located radially outside the supporting sleeve 58. The outside surface of the fictional sleeve 56 is in contact with the insider surface of the outer sleeve 32 of the base 24, the inside surface of the frictional sleeve 56 is in contact with the outside surface of the supporting sleeve 58, and the inside surface of the supporting sleeve 58 is in contact with the outside portion of the elastic element 48. The inside surface of the fictional sleeve 56 is provided with several radial protrusions 57, and the supporting sleeve 58 is correspondingly provided with several openings 59 for having the several protrusions 57 pass therethrough, such that the supporting sleeve 58 and the frictional sleeve 56 can not move with respect to each other. In the present embodiment, the supporting sleeve 58 is made of metal material, such as stainless steel. The supporting sleeve 58 transfers the force of the elastic element 48 uniformly to the frictional sleeve 56. The frictional sleeve 56 and the supporting sleeve 58 have the sections both in the C shape approximately, that is, the frictional sleeve 56 and the supporting sleeve 58 are respectively split along the circumference direction.

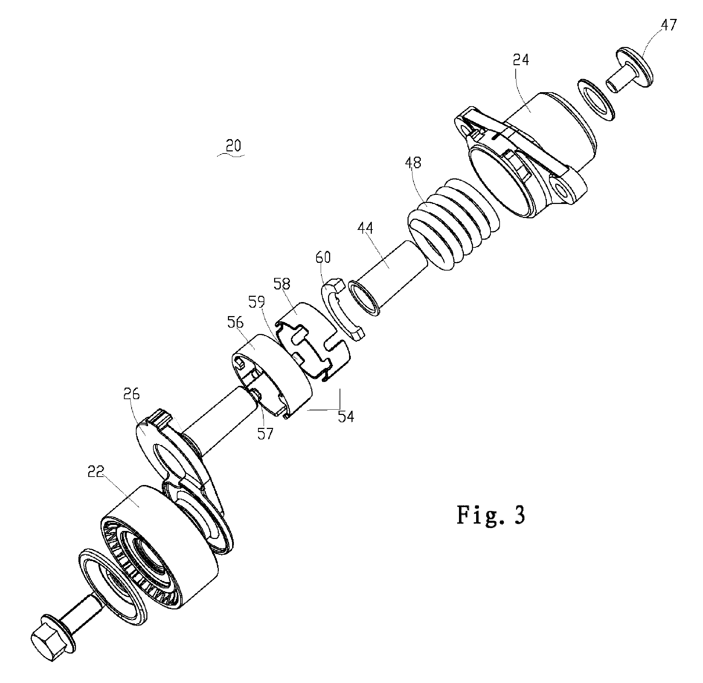

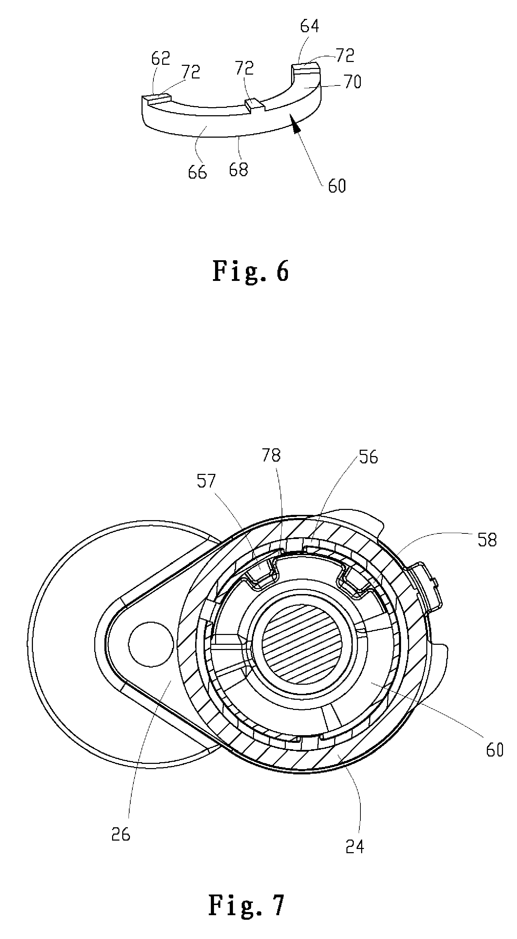

Referring to Figs. 2, 3 and 6 at the same time, the tensioner 20 also comprises a supporting block 60 which is positioned radially inside the frictional device 54. The supporting block 60, together with the frictional device 54, is mounted at the swing arm 26 and capable of moving together with the swing arm 26, with respect to the base 24. Particularly, the supporting block 60 is located between the supporting sleeve 58 and the first shaft sleeve 40. Viewing from the first central axis X of the first shaft sleeve 40, the supporting block 60 is in the partial ring shape. The central angle of the partial ring may be any angle between 90° to 180°, preferably 120°. For being better understood, the present embodiment is to be described with the example of the central angle of 180° ,that is the supporting block 60 is like the semi-circle ring shown in Figs. 3 and 6. The supporting block 60 is arranged to surround the first shaft sleeve 40. The supporting block 60 comprises a first end face 62 and a second end face 64 which are respectively at two ends of the semi-circle ring supporting block 60 along the circumference direction. Along the radial direction, the supporting block 60 comprises an outside surface 66 in contact with the inside surface of the supporting sleeve 58. The supporting block 60 exerts a pressure on the fictional device 54 in the radial direction, such that an additional frictional force is generated between the frictional device 54 and the insider surface of the outer sleeve 32, which will be described in detail below. Along the longitudinal direction, the supporting block 60 comprises an upper surface and a lower surface 70. The lower surface 70 of the supporting block 60 is provided with three protrusions 72 arranged circumferentially at interval, with the three protrusions 72 in contact with the elastic element 48. The thickness of the supporting block 60 has a gradually increasing trend along the circumferential direction from one end face to the other end face, and/or the three protrusions 72 have gradually increasing thicknesses, such that the supporting block, as a whole, has a spirally increasing trend in its circumferential thickness, so as to spirally cooperate with the spring.

Further referring to Figs. 4 and 7, the swing arm body 38 is proved with a first abutting surface 74 and a central boss 76, at its one side facing the first shaft sleeve 40. The first abutting surface 74 is in contact with the first end face 62 of the supporting block 60. The central boss 76 is in contact with the upper surface 68 of the supporting block 60, and along the axial direction, the supporting block 60 is located between the central boss 76 and the elastic element 48. The central boss 76 is provided with a boss cooperation portion 77 which is provided for cooperating with the supporting block 60. Starting from the position of the first abutting surface 74, the thickness of the boss cooperation portion 77 gradually increases in the circumferential direction, approximately presenting spirally rising trend, and the length of the axial extension of the boss cooperation portion 77 is slightly less than the length of the circumferential extension of the supporting block 60. The central boss 76 is provided with several receiving recesses 78, and the radial protrusions 57 provided on the frictional sleeve 56 pass through the openings 59 provided on the supporting sleeve 58 to cooperate with the several receiving recesses 78, such that the frictional device 54 can rotate together with the swing arm 26. The second end face 64 of the supporting block 60 is in contact with the free end 52 of the elastic element 48 (referring to Fig. 8).

The operations of the tensioner 20 will be described below.

During use of the tensioner 20, the transmission belt exerts force on the pulley 22 which drives in turn the swing arm 26 to swing about the first central axis X by an angle. Thus, the first abutting surface 74 of the swing arm body 38 pushes the first end face 62 of the supporting block 60, such that the second end face 64 of the supporting block pushes the free end 52 of the elastic element 48 tangentially. The elastic element 48 will expand in the radial direction such that the elastic element 48 exerts a first pressure on the fictional device 54. Due to the presence of the first pressure, when the frictional device 54 rotates with the swing arm 26 with respect to the base 24, a first frictional force will be generated between the outside surface of the frictional sleeve 56 and the inside surface of the outer sleeve 32 of the base 24. The first fictional force prevents the swing arm 26 from rotating with respect to the base 24, so as to buffer the respective movement between the both. At the same time, when the elastic element 48 expands, the free end 52 of the elastic element 48 will exert a thrusting force on the second end face 64 of the supporting block 60. The first abutting surface 74 is in contact with the first end face 62 of the supporting block 60, and under the thrusting force, the supporting block 60 will pivot around a contacting surface between the first abutting surface 74 and the first end face 62, such that the supporting block 60 will move outward along the radial direction, and further exert a second pressure on the fictional device 54, such that a second frictional force is generated between the frictional sleeve 56 and the inside surface of the outer sleeve 32 of the base 24. The second fictional force will as well prevent the swing arm 26 from rotating with respect to the base 24, and it butters the relative movement between the both. As a result, the first frictional force and the second fictional force collectively prevent the swing arm 26 from rotating with respect to the base 24, such that the tensioner 20 has relatively lager damping force.

Referring to Fig. 9, the schematic view of force analysis of the supporting block 60 is shown. In the figure, N1 represents the thrusting force that the free end 52 of the elastic element 48 exerts on the second end face 64 of the supporting block 60. When the free end 52 of the elastic element 48 pushes the second end face 64 of the supporting block 60, the first end face 62 of the supporting block 60 exerts force on the first abutting surface 74, such that the first abutting surface 74 exerts a counterforce N2 on the first end face 62 of the supporting block 60. Under the combined effects of forces N1 and N2, the supporting block 60 exerts force to the frictional device 54, such that the frictional device 54 exerts a counterforce N3 to the supporting block 60. In the technical solution of the present invention, N3 is equal to N1 plus N2.

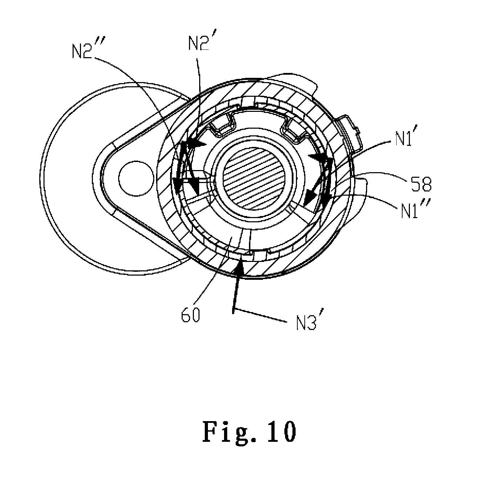

The above force analysis is made with the example of the supporting block with the central angle of 180°. When the central angle of the supporting block is different from 180°, the generated damping effect is different. For example, when the supporting block having the angle of 120°, referring to Fig. 10, the counterforce N3' that the supporting block undergoes is approximately equal to component forces N1" plus N2", wherein the component forces N1" plus N2" are the component forces of the N1' and N2' along the opposite direction of N3' (N1' and N2' approximately equal to N1 and N2, respectively). Therefore, N3' is less than N3 which is generated when the central angle of the supporting block is 180° (Fig. 9). In summary, the damping effect of the supporting block can be adjusted by providing the supporting block with different central angle.

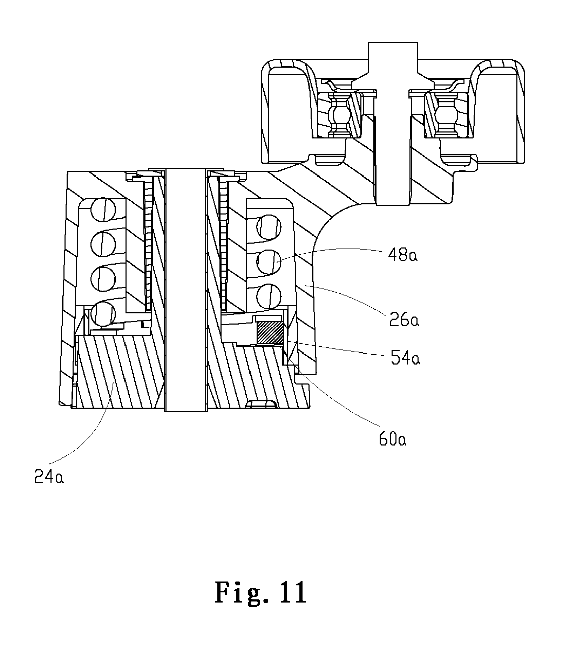

Referring to Fig. 11, the second embodiment of the present invention is shown. The present embodiment is substantially same to the first embodiment except for the facts: the supporting block 60a and the frictional device 54a are mounted on the base 24a, rather than on the swing arm body. Thus, when the elastic element 48a radially expands, it exerts a first pressure on the frictional device 54a, such that a first frictional force is generated between the outside surface of the frictional device 54a and the inside surface of the swing arm 26a. At the same time, the radial expansion of the elastic element 48a makes the supporting block 60a exert radially a second pressure to the frictional device 54a, such that a second frictional force is generated between the frictional device 54a and the inside surface of the swing arm 26a. Therefore, when the tensioner is in operation, the first frictional force and the second frictional force collectively prevent the swing arm 26a from rotating with respect to the base 24a.

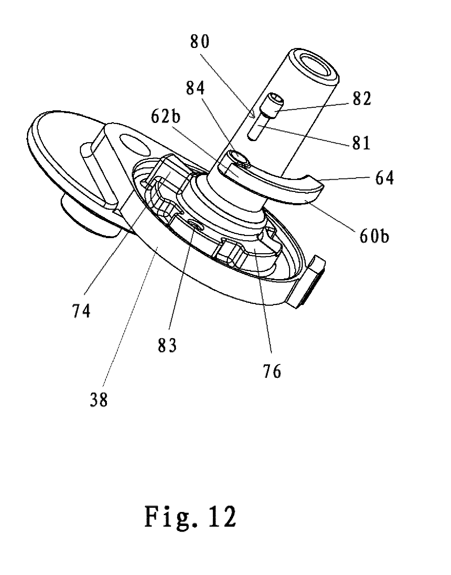

Referring to the third embodiment of the present invention shown in Fig. 12, it differs from the first embodiment at the fact that: the first end 62b of the supporting block 60b does not abut against the first abutting surface 74 of the swing arm body 38, but is pivotably hinged on the central boss 76 of the swing arm body 38 through the hinging member 80. Particularly, the hinging member 80 consists of two coaxial cylindrical parts with different diameters, with the small diameter cylindrical part 81 having screw threads and the larger diameter cylindrical part 82 having smooth outer surface. The central boss 76 is provided therein with a threaded hole 83 which threadly cooperates with the small diameter cylindrical part 81. The supporting block 60b is provided on its one end with a hole 84 comprising two coaxial unthreaded holes with different diameters. Therefore, the hole 84 presents step form in the sections along the longitudinal axis, wherein the hole with the large diameter cooperates with the large diameter part 82 of the hinging member, and the hole with the small diameter cooperates with the small diameter part 81 of the hinging member. As a result, when the hinging member 80 passes through the hole 84 in the supporting block 60b to be screwed in the threaded hole 83 in the central boss 76, the supporting block 60b can pivot about the hinging member with respect to the swing arm. Other components are same to the above embodiments, and function in the same way as the above embodiments. Thus, when the swing arm 26 swings about the first central axis X by an angle, the central boss 76 on the swing arm body 38 drives, through the hinging member 80, the hinging end 62b of the supporting block 60, such that the second end face 64 of the supporting block pushes tangently the free end 52 of the elastic element 48 (not shown in Fig. 12). It is needed to state that although Fig 12 shows the first abutting surface 74, in this embodiment since the supporting block 60b is hinged on the central boss 76, it is possible to omit the first abutting surface.

The above description of the embodiments is only exemplary, while not intended to limit the present invention. One skilled in the art can make various modifications to the above embodiments, without departing the scope defined by claims of the present invention.

## Claims

1. A tensioner which comprises:
a base;
a swing arm, mounted on the base, rotating about a first central axis with respect to the base;
an elastic element, positioned between the base and the swing arm, which is used for biasing the swing arm to rotate with respect to the base;
a frictional device, which is located between the elastic element and the base or the swing arm, for buffering the relative movement between the swing arm and the base,
with the elastic element exerting along the radial direction a first pressure on the frictional device such that a first frictional force is produced between the frictional device and the base or the swing arm,
**characterized in that**
the tensioner further comprises a supporting block which exerts along the radial direction a second pressure on the frictional device such that a second frictional force is produced between the frictional device and the base or the swing arm.

2. The tensioner according to Claim 1, **characterized in that** the supporting block is in a partial-ring shape, with the center angle of the partial-ring shape can be any between 90° to 180°, and the supporting block is located radially inside of the frictional device.

3. The tensioner according to Claim 2, **characterized in that** the supporting block has a center angle of 120°.

4. The tensioner according to Claim 2, **characterized in that** the supporting block has a center angle of 180°, that is, being in semi-circle shape.

5. The tensioner according to Claim 2, **characterized in that** the supporting block comprises a first end face and a second end face which are respectively located at two circumferential ends of the partial-ring shape supporting block, and the swing arm is provided with a first abutting surface, the elastic element comprises a fixed end and a free end, the fixed end is connected with the base, the first end face of the supporting block is in contact with a first abutting surface of the swing arm, and the second end face of the supporting block is in contact with the free end of the elastic element.

6. The tensioner according to Claim 2, **characterized in that** the supporting block comprises a first end and a second end face which are respectively located at two circumferential ends of the partial-ring shape supporting block, and the elastic element comprises a fixed end and a free end, the fixed end is connected with the base, the first end of the supporting block is pivotably hinged to the swing arm, and the second end face of the supporting block is in contact with the free end of the elastic element.

7. The tensioner according to Claim 6, **characterized in that** said hinging is achieved by a hinging member which consists of two coaxial cylindrical parts with different diameters, the cylindrical part with smaller diameter is provided with screw threads and the cylindrical part with larger diameter has smooth outer surface, the swing arm is provided with a threaded hole which is threadly engaged with the cylindrical part with smaller diameter, the supporting block has a hole in the first end, the hole includes two coaxial unthreaded holes with different diameters, the hole presents the step form in the cross section along the longitudinal axis, wherein the hole with large diameter pivotly cooperates with the large diameter part of the hinging member and the hole with small diameter pivotly cooperates with the small diameter part of the hinging member, and when the hinging member passes through the hole in the supporting block to be screwed in the threaded hole in the swing arm, the supporting block can pivots around the hinging member with respect to the swing arm.

8. The tensioner according to Claim 2, **characterized in that** the swing arm comprises a swing arm body, a first shaft sleeve and a second shaft sleeve, wherein the supporting block surrounds the first shaft sleeve, the swing arm body is provided with a first abutting surface and a central boss on one side facing to the first shaft sleeve, and the supporting block, along the longitudinal direction, is located between the central boss and the elastic element.

9. The tensioner according to Claim 8, **characterized in that** the central boss is provided thereon with a boss cooperation portion which is used for cooperating with the supporting block, and the thickness of the boss cooperation portion gradually increases circumferentially, starting from the position of the first abutting surface, presenting a trend of rising spirally.

10. The tensioner according to Claim 9, **characterized in that** the thickness of the supporting block circumferentially increases gradually.

11. The tensioner according to Claim 9, **characterized in that** the circumferential extension of the boss cooperation portion is slightly less than the circumferential extension of the supporting block.

12. The tensioner according to Claim 9 or 10, **characterized in that** the supporting block comprises an upper surface and a lower surface and the lower surface is provided with at least one protrusion which is in contact with the elastic element.

13. The tensioner according to Claim 12, **characterized in that** the number of the protrusions is three, the protrusions are arranged at an interval in the circumferential direction, and the three supporting protrusions have thicknesses increased gradually.

14. The tensioner according to Claim 1, **characterized in that** the frictional device comprises a frictional sleeve and a supporting sleeve, the frictional sleeve is located radially outside the supporting sleeve, the outer surface of the frictional sleeve is in contact with the inner surface of the base, and the inner surface of the supporting sleeve is in contact with the outside portion of the elastic member.

15. The tensioner according to Claim 14, **characterized in that** the inner surface of the frictional sleeve is provided with several radial protrusions, the supporting sleeve is correspondingly provided with several openings, the swing arm is provided with several receiving recesses, wherein the several protrusions pass through the several openings to cooperate with the several receiving recesses on the swing arm, such that the frictional sleeve, together with the supporting sleeve, rotates with the swing arm.

16. The tensioner according to Claim 1, **characterized in that** the supporting block and the frictional device are mounted on the base, and the swing arm rotates with respect to the base, the supporting block and the frictional device.
